# EUROPÄISCHE PATENTSCHRIFT

(11) **EP 0 570 846 B1**
(45) Veröffentlichungstag und Bekanntmachung des Hinweises auf die Patenterteilung: **16.10.1996**
(21) Anmeldenummer: 93107795.2
(22) Anmeldetag: 13.05.1993
(51) Int. Cl.: G11B 5/704

(54) **Flexible magnetische Aufzeichnungsträger mit Rückschicht**
Flexible magnetic record carrier with backing layer
Support flexible d'enregistrement magnétique muni d'une couche dorsale

(30) Priorität: 21.05.1992 DE 4216847
(43) Veröffentlichungstag der Anmeldung: 24.11.1993
(73) Patentinhaber: BASF Magnetics GmbH, 68165 Mannheim (DE)
(72) Erfinder: Roller, Hermann, W-6700 Ludwigshafen (DE); Engelhardt, Peter, W-3253 Hessisch Oldendorf (DE); Baur, Reinhold, Dr., W-7601 Ortenberg (DE); Bobrich, Michael, Dr., W-6737 Boehl-Iggelheim (DE); Latzel, Werner, Dr., W-7602 Oberkirch (DE); Lenz, Werner, Dr., W-6702 Bad Duerkheim (DE); Suettinger, Rudolf, Dr., W-6900 Heidelberg (DE)
(74) Vertreter: Karau, Wolfgang, Dr.

(56) Entgegenhaltungen:
- DE-A- 3 436 262
- US-A- 4 789 583
- DATABASE WPI Week 9225, Derwent Publications Ltd., London, GB; AN 92-204580 & JP-A-4 134 619 (MATSUSHITA ELEC IND CO LTD) 8. Mai 1992

## Beschreibung

Die Erfindung betrifft flexible magnetische Aufzeichnungsträger, im wesentlichen bestehend aus einem bahnförmigen unmagnetischen Substrat, einer auf der einen Hauptseite des bahnförmigen Substrats aufgebrachten Magnetschicht und einer auf der gegenüberliegenden Hauptseite des Substrats aus einem polymeren Bindemittel und nichtmagnetischen Füllstoffen sowie Stützpigmenten gebildeten Rückschicht.

Es ist bekannt, flexible magnetische Aufzeichnungsträger mit nicht magnetisierbaren, nicht-leitfähigen und/oder leitfähigen Stoffen enthaltenden Rückschichten zu versehen. In der US-A 3 293 066 wird beschrieben, daß elektrostatische Aufladungen von Magnetbändern, die sich bei Aufzeichnungsgeräten mit hohen Bandgeschwindigkeiten bilden können, durch Aufbringen leitfähiger Rückschichten beseitigt und außerdem durch Rückschichten die Bandrückseiten verschleißfester gemacht werden können. Es ist außerdem aus der GB-A 1 197 661 und der US-A 4 135 031 bekannt, durch Aufbringen von Rückschichten mit einer vorgegebenen Oberflächenrauhigkeit die Wickeleigenschaften von Magnetbändern zu verbessern. Auch für Magnetkarten sind solche Rückschichten bekannt. Aus der EP-A 101 020 sind spezielle Bindemittelmischungen bekannt, welche insbesondere unter Zusatz von Ruß Rückschichten mit ausgezeichneter Haft-, Verschleiß- und Klimafestigkeit erbringen.

Von besonderer Wichtigkeit sind derartige Rückschichten bei Videobändern, insbesondere bei solchen für den Heimvideobereich. So wird u. a. in der US-A 4 735 325 zur Verbesserung der Kratzfestigkeit und zur Reduzierung der Fehlerzahl eine Rückschicht vorgeschlagen, welche aus Ruß unterschiedlicher Teilchengröße sowie aus Füllstoffen mit einer Mohshärte ≥ 8 dispergiert in einem polymeren Bindemittel besteht. Neben einer Verbesserung der Verschleißfestigkeit und einer Verringerung der Abrasivität dienen die vorgeschlagenen Rückschichten auch zur Verminderung der Lichtdurchlässigkeit des Bandmaterials, was insbesondere bei der Benutzung derartiger Bänder auf handelsüblichen Videorekordern erforderlich ist. Hierzu wird in der EP-A 105 471 eine Rückschicht auf Basis Bariumsulfat/α-Eisen(III)-oxid mit oder ohne besondere Rußzusätze vorgeschlagen.

DE-A-3 436 262 beschreibt ein magnetisches Aufzeichnungsmedium mit einer Magnetschicht auf einer Oberfläche eines nichtmagnetisierbaren Substrats und einer Rückseitenschicht, die im wesentlichen aus einem Bindemittel und einem nichtmagnetisierbaren Pigment besteht, auf der anderen Oberfläche des Substrats. Die Rückseitenschicht enthält in dem Bindemittel mehr als 80 Gew.-% eines hydrophile polare Gruppen enthaltenden Polyurethanharzes und/oder Polyesterharzes. Die Rückseitenschicht enthält weiterhin Ruß zur Verhinderung von elektrostatischen Aufladungen und Pigmente mit einer Mohsschen Härte von mehr als 5 zur Verbesserung der Lebensdauer. Das Ruß/Pigment-Gewichtsverhältnis liegt im Bereich von 95:5 bis 60:40.

Mit der US-A-5 419 959 werden transparente Rückschichten für magnetische Aufzeichnungsträger bereitgestellt, die sowohl hinsichtlich der mechanischen Eigenschaften, wie Verschleißfestigkeit und Abrasivität, den Anforderungen genügen als auch gleichzeitig eine ausreichende Lichtdurchlässigkeit aufweisen, so daß ein entsprechendes magnetisches Aufzeichnungsmedium auch für das Thermoduplizier-Verfahren (TMD-Verfahren) einsetzbar ist.

Die Bereitung der Dispersionen aus den angeführten Komponenten geschieht in Dispergiereinrichtungen, im allgemeinen Mühlen genannt, mit deren Hilfe durch das Einwirken eines, je nach Bauart der Mühle, mittleren bis hohen Schergefälles, die pulverförmigen Materialien weitgehend in ihre Einzelteilchen getrennt und mit dem Bindemittel und/oder Netzmittel umhüllt werden. Bedingt durch die Art der Herstellung als auch durch die sich daran anschließende Aufbereitung der unmagnetischen Pulvermaterialien entstehen aus Einzelteilchen aufgebaute Agglomerate mit sehr unterschiedlichem Sekundärteilchendurchmesser. Zur Herstellung hochwertiger Rückschichten ist es aber erforderlich, daß die Feststoffe entsprechend ihren Eigenschaften für die Rückschicht als weitgehend gleichförmige Einzelteilchen in einer vorgegebenen Rauhigkeit in gleichmäßigen Abständen zueinander vorliegen. Um dies mit wirtschaftlich vertretbarem Zeitaufwand zu erreichen, werden, wie z. B. in der DE-A 35 26 415 für Magnetschichten aufgezeigt, Dispergiermaschinen mit hoher örtlicher Energiedichte, wie z. B. Rührwerksmühlen, Planetkugelmühlen, Sandmühlen oder Attritoren, eingesetzt. Die bekannten Dispergierverfahren haben jedoch einen besonderen Nachteil. Durch das Einbringen sehr hoher Energiedichten und die Verwendung von Mahlkörpern von 0,2 bis 4,0, üblicherweise 0,6 bis 2,0 mm Durchmesser, werden die Pigmentagglomerate weitgehend in ihre Einzelteilchen aufgeteilt und dadurch die benetzbare Pigmentoberfläche vergrößert. Bei konstanter Dispergier- und/oder Bindemitteladsorptionsschicht wird mit zunehmendem Aufteilungsgrad die Bindemitteladsorptionsschicht dünner, wodurch die für die sterische Stabilisierung notwendige elastische Deformation der Adsorptionsschicht nicht mehr gewährleistet ist, die elastischen entropischen und osmotischen Abstoßungseffekte können nicht mehr in ausreichendem Maße wirksam werden mit der Folge, daß Dispersionen, hier speziell Rückschichtdispersionen, sich vielfach instabil verhalten. Erkenntlich ist dies beispielsweise beim Glanzvergleich zweier Handaufstriche, den einen hergestellt unmittelbar nach Dispergierende, den anderen einige Stunden später nach Rühren der Dispersion im Vorratsbehälter. Der Glanzwert des zweiten Handaufstrichs liegt deutlich unter dem des ersten, verbunden mit einem unerwünschten Anstieg der Schichtrauhigkeit. Durch die Verwendung bekannter und üblicher Dispergierhilfsmittel, wie Sojalecithin, Phosphorsäureabkömmlingen vom Gafac-Typ etc., läßt sich das Problem nicht lösen.

Die ständige Forderung nach höheren Aufzeichnungsdichten, maximalen Ela- und Elav-Werten bei immer geringeren Schichtdicken der magnetischen Schichten, erfordert jedoch homogene, äußerst glatte Oberflächen der Aufzeichnungsträger und feinrauhe, fehlerfreie Rückschichten.

Aufgabe der vorliegenden Erfindung war es deshalb, unter den gegebenen technischen Bedingungen eine Rückschichtdispersion bereitzustellen, die nach Abschluß der Dispergierung stabil bleibt, d. h. weder Glanzabfall noch Rauhigkeitsanstieg zeigt und hinsichtlich der mechanischen Eigenschaften, wie Verschleißfestigkeit und Abrasivität, den Anforderungen genügt.

Es wurde nun gefunden, daß magnetische Aufzeichnungsträger, im wesentlichen bestehend aus einem bahnförmigen unmagnetischen Substrat, einer auf der einen Hauptseite des bahnförmigen Substrats aufgebrachten Magnetschicht und einer auf der gegenüberliegenden Hauptseite des Substrats aus einem polymeren Bindemittel und nichtmagnetischen Füllstoffen sowie Stützpigmenten gebildeten Rückschicht, den gestellten Anforderungen genügen, wenn die Rückschicht 15 bis 40 Vol.-%, bezogen auf das Volumen der Rückschicht, einer Fällungskieselsäure mit einem SiO₂-Gehalt von 98 bis 99,5 %, einem pH-Wert von 5 bis 7 und einer spezifischen Oberfläche von 90 bis 650 m²/g enthält, deren Oberfläche mit einem Polyester/Polyetherurethan mit einem Molekulargewicht M_{w} zwischen 40 000 und 120 000, das Phosphatgruppen in einer Menge von 10 bis 100 mÄquivalent Phosphat pro Kilogramm Polyurethan aufweist, in einer Menge von 0,05 bis 0,25 mg/m² belegt ist.

Die in der Rückschicht der erfindungsgemäßen Aufzeichnungsträger enthaltene gefällte Kieselsäure mit einer spezifischen Oberfläche von 90 bis 650 m²/g und insbesondere von 100 bis 150 m²/g weist außerdem eine Sekundärteilchengröße von 3 bis 4 µm auf. Die Oberfläche dieser Kieselsäure ist mit dem Phosphatgruppen-tragenden Polyurethan belegt, dessen Molekulargewicht M_{w} 40 000 bis 120 000 und insbesondere 60 000 bis 70 000 beträgt, wobei das Verhältnis M_{w} zu Mₙ 1,3 bis 3,0 ist. Der Anteil der Phosphatgruppen, welche sowohl seiten- als auch endständig sein können, macht 10 bis 100 und insbesondere 40 bis 80 mÄquivalent pro kg Polyurethan aus. Die Dichte des Materials umfaßt den Bereich von 1,16 bis 1,20 g/cm³ und die Glastemperatur T_{g} den von -5 bis +70°C. Bei diesen Polyurethanen handelt es sich um Produkte auf Polyester/Polyether/-MDI-Basis. Entsprechende Polyurethane sind bekannt. Aufgrund der polaren Gruppen im Molekül sind sie etwas feuchtigkeitsempfindlich und müssen deshalb mit anderen organischen Polymeren abgemischt werden. Als solche organische Polymere eignen sich die an sich bekannten Bindemittel. Dies sind in üblichen Lösungsmitteln lösliche Polyvinylformale, Polyurethanelastomere, Mischungen von Polyisocyanaten und höhermolekularen Polyhydroxylverbindungen, Nitrocellulosen, Vinylchloridpolymerisate mit über 60 % an Vinylchlorid-Molekülbausteinen, copolymerisiertes Vinylchlorid mit einer oder mehreren ungesättigten Carbonsäuren mit 3 bis 5 C-Atomen als Comonomerem oder hydroxylgruppenhaltige Vinylchloridcopolymerisate, die durch partielle Verseifung von Vinylchlorid-Vinylester-Copolymerisaten oder direkte Copolymerisation von Vinylchlorid mit hydroxylgruppenhaltigen Monomeren, wie Allylalkohol oder 4-Hydroxybutyl- oder 2-Hydroxyethyl-(meth)acrylat hergestellt werden können. Ferner sind als Bindemittel geeignet Abmischungen von einem oder mehreren Polyurethanelastomeren mit Polyvinylformalen, Phenoxyharzen und Vinylchloridcopolymerisaten der oben angegebenen Zusammensetzung.

Als Lösungsmittel für die Herstellung und Verarbeitung der Polymeren werden vorzugsweise cyclische Ether, wie Tetrahydrofuran und Dioxan, und Ketone, wie Methylethylketon oder Cyclohexanon verwendet. Selbstverständlich können Polyurethane auch in anderen stark polaren Lösungsmitteln, wie Dimethylformamid, Pyrrolidon, Dimethylsulfoxid oder Ethylglykolacetat gelöst werden. Ebenso ist es möglich, die genannten Lösungsmittel mit Aromaten, wie Toluol oder Xylol, und Estern, wie Ethyl- oder Butylacetat, zu mischen.

Als Füllstoffe eignen sich gleichfalls bekannte Produkte wie Kalziumcarbonat, Bariumsulfat und /oder Gips mit einer mittleren Agglomeratgröße von 0,05 bis 4 µm. Kugelförmiges Polyolefin einer Teilchengröße von 10 bis 1000 µm kann ebenfalls mitverwendet werden in gleicher Weise wie auch Ruß.

Zur Dispergierung werden die Komponenten zusammen mit dem gelösten organischen Polymeren allein oder mit an und für sich bekannten und üblichen Dispergierhilfsmitteln, wie Sojalecithin, gesättigten oder ungesättigten, geradkettigen oder verzweigten Fettsäuren, Fettsäuresalzen, quartären Ammoniumverbindungen und Phosphorsäureabkömmlingen, gemischt und in bekannten Dispergiereinrichtungen verarbeitet. Außerdem kann es zweckmäßig sein, diesen Rückschichten noch übliche Gleitmittel wie Fettsäure, Fettsäureester, Siliconöle oder Additive auf Fluorbasis zuzusetzen.

Die Herstellung der für die Rückschicht vorgesehenen Dispersion erfolgt in vertikalen oder horizontalen Rührwerkskugelmühlen. Hierbei hat es sich als zweckmäßig herausgestellt, die Phosphatgruppen-haltigen Polyurethane sowohl in der Dispergierphase als auch in der sogenannten Auflackphase (sogenannte Dispergierstufen I und II) beizumengen und zwar vorzugsweise im Verhältnis 40 : 60 bis 60 : 40. Die Rückschicht wird bevorzugt nach dem Rasterwalzenverfahren aufgebracht. Zur Verdampfung der Lösungsmittel und Trocknung bzw. Härtung der Rückschicht wird diese durch einen Wärmekanal geführt. Dabei ist es möglich, sowohl Magnet- und Rückschichtdispersionen in einem Arbeitsgang als auch hintereinander aufzutragen. Die beschichteten Folien können noch, falls erforderlich, auf üblichen Maschinen durch Hindurchführen zwischen geheizten und polierten Walzen, ggf. bei Anwendung von Druck, geglättet und verdichtet werden. Die Dicke der Rückschicht beträgt weniger als 5,0, insbesondere weniger als 2,5 und vorzugsweise 0,3 bis 1,0 µm.

In einer vorteilhaften Ausführung der erfindungsgemäßen magnetischen Aufzeichnungsträger ist die Rückschicht zusammengesetzt aus 3 bis 60, insbesondere 5 bis 30, Vol.-% eines Polyurethans mit 10 bis 100 mÄquivalent Phosphat, vorzugsweise 40 bis 80 mÄquivalent Phosphat pro kg Produkt, einem Molekulargewicht M_{w} von 40 000 bis 120 000, vorzugsweise 60 000 bis 70 000, einem Verhältnis M_{w}/Mₙ ∼ 1,8, und einer Tg von 36°C; 10 bis 35, vorzugsweise 15 bis 30, Vol.-% eines linearen Polyesterurethans aus Adipinsäure, 1,4-Butandiol und 4,4'-Diisocyanatdiphenylmethan; 10 bis 40, vorzugsweise 15 bis 35, Vol.-% eines Polyphenoxyharzes aus Bisphenol A und Epichlorhydrin; 5 bis 30, vorzugsweise 10 bis 25, Vol.-% eines Polyisocyanatharzes; 15 bis 40, vorzugsweise 20 bis 25, Vol.-% einer Fällungskieselsäure mit einem SiO₂-Gehalt von 98 bis 99,5 %, einem pH-Wert von 5 bis 7 sowie einer Dichte von 1,9 g/cm³; 0,5 bis 5, vorzugsweise 1,5 bis 3,5 Vol.-% eines kubischen Zinkferrits mit einer mittleren Teilchengröße von 0,1 bis 0,5 µm, eines kugelförmigen α-Fe₂O₃ oder eines Al₂O₃; und 1 bis 10, vorzugsweise 2,5 bis 7,5 Vol.-% eines kugelförmigen LD-Polyolefins (Polyolefin niederer Dichte). Neben den 5 Vol.-% nicht übersteigenden Mengen eines bekannten Dispergierhilfsmittels sowie eines Gleitmittels kann es gegebenenfalls zweckmäßig sein, die nicht leitfähigen Füllstoffe durch bis zu 25 Vol.-% eines Rußes zu ersetzen.

Die erfindungsgemäßen magnetischen Aufzeichnungsträger zeigen aufgrund der homogenen Rückschicht ein außerordentlich vorteilhaftes Verhalten. Aufgrund der Dispersions-Stabilität und Homogenität der Rückseite derartiger magnetischer Aufzeichnungsträger weisen entsprechende Videobänder stark reduzierte Fehlerzahl und deutlich verbesserte elektromagnetische Werte gegenüber solchen nach dem Stand der Technik auf.

Die Erfindung sei anhand folgender Beispiele im Vergleich zu Versuchen nach dem Stand der Technik näher erläutert. Die in den Beispielen und Vergleichsversuchen genannten Teile und Prozente beziehen sich, soweit nicht anders angegeben ist, auf das Volumen.

Bei den angegebenen Molekulargewichten für die Polyurethane handelt es sich um das Gewichtsmittel M_{w}, bestimmt durch Gelpermeationschromatographie.

### Beispiel 1

In eine diskontinuierliche Rührwerksmühle mit einem Volumen von 10 000 Teilen wurden 3 325 Teile Zirkondioxidkugeln mit einem Durchmesser von 1,0 - 1,25 mm, 79,02 Teile einer 12,5 %igen Lösung eines Polyurethan auf Polyester-Polyether-MDI-Basis mit einem mittleren Molekulargewicht von 70 000 und einem Phosphatgehalt von 40 mÄquivalent/kg Produkt und einer Adsorption von 0,08 mg/m², auf einer Fällungskieselsäure mit einer mittleren Sekundärteilchengröße von 3 µm in einem Gemisch aus 46,94 Teilen Tetrahydrofuran und 40,65 Teilen Dioxan, 105,82 Teile einer 16,83 %igen Lösung eines Polyphenoxyharzes aus Bisphenol A und Epichlorhydrin mit 6 Gew.-% Hydroxylgruppen in einem Gemisch aus 44,62 Teilen Tetrahydrofuran und 38,55 Teilen Dioxan, 73,5 Teile einer 10,62 %igen Lösung eines linearen Polyesterurethanharzes, hergestellt aus Adipinsäure, 1,4-Butandiol und 4,4'- Diisocyanatodiphenylmethan in einem Gemisch aus 47,95 Teilen Tetrahydrofuran und 41,43 Teilen Dioxan, 3,8 Teile einer isomeren C₁₈-Carbonsäure, 837 Teile eines Gemisches aus 449 Teilen Tetrahydrofuran und 388 Teilen Dioxan, 71,5 Teile der genannten Fällungskieselsäure, 6,8 Teile eines kubischen Zinkferrits mit einer mittleren Teilchengröße von 0,12 µm, 9,2 Teile eines Polyolefins mit einem mittleren Molekulargewicht von 3 000 und einem mittleren kugelförmigen Teilchendurchmesser von 500 µm, eingefüllt. Dann wurde die Rührwerksmühle verschlossen und der Inhalt 6 Stunden dispergiert. Danach wurde die Mühle wieder geöffnet und noch 79,02 Teile einer 12,5 %igen Lösung des zuvor beschriebenen Polyurethans in einem Gemisch aus 46,94 Teilen Tetrahydrofuran und 40,56 Teilen Dioxan, 437,75 Teile einer 16,83 %igen Lösung des zuvor beschriebenen Polyphenoxyharzes in einem Gemisch aus 44,62 Teilen Tetrahydrofuran und 38,55 Teilen Dioxan, 15,40 Teile einer 9,26 %igen Lösung von Dibutylzinndilaurat in einem Gemisch aus 48,68 Teilen Tetrahydrofuran und 42,06 Teilen Dioxan, 6,9 Teile einer 8,5 %igen Lösung eines Fluoradditives in einem Gemisch aus 49,10 Teilen Tetrahydrofuran und 42,4 Teilen Dioxan, 657 Teile einer 10,62 %igen Lösung des zuvor beschriebenen linearen Polyesterurethanharzes in einem Gemisch aus 47,95 Teilen Tetrahydrofuran und 41,43 Teilen Dioxan, 1644 Teile eines Gemisches aus 882 Teilen Tetrahydrofuran und 762 Teile Dioxan, eingefüllt und weitere 3 Stunden gemahlen.

Die Dispersion wurde nun der Mühle entnommen und geteilt. Der eine Teil wurde zur Messung der Dispersionsstabilität, der zweite und größere Teil zum Beschichten verwendet. Die Messung der Dispersionsstabilität wurde wie folgt durchgeführt: Glasflaschen mit 100, 150 und 250 ml Inhalt wurden etwa zu 2/3 mit der zu untersuchenden Dispersion aufgefüllt und nach Verschließen der Flaschen auf ein Rollbrett gelegt. Nach einer bzw. 24 Stunden wurden die Flaschen geöffnet und jeweils ein Handaufstrich mit einem Handrakel auf einer sehr glatten, 75 µm dicken Polyesterfolie mit einem Rz-Wert von 40 - 50 nm hergestellt. Von diesen wurden die Glanzwerte mit Hilfe eines Glanzmeßgerätes ermittelt und mit den Werten der frisch gefertigten Dispersion, von der vor der Rollbrettlagerung gleichfalls ein Handaufstrich gezogen wurde, verglichen. Zusätzlich wurde mit Hilfe bekannter Methoden die Rauhigkeit der Handaufstriche vor und nach Rollbrettlagerung gemessen. Bei stabilen Dispersionen wurde keine bzw. nur eine geringe Änderung gegenüber den Ausgangswerten beobachtet, bei instabilen jedoch zum Teil in erheblichem Maß.

Der Test erlaubt eine Aussage darüber, ob eine Dispersion während des Verarbeitungsprozeßes, beispielsweise während des Rührens und Filtrierens im Vorratsbehälter, homogen bleibt oder durch Flokkulation inhomogen wird mit allen daraus entstehenden Nachteilen, wie z. B. Rauhigkeitsanstieg der hergestellten Schichten. Die Ergebnisse der Stabilitätsprüfung sind in der Tabelle 1 aufgeführt.

Der zweite Teil der Dispersion wurde wie folgt weiterverarbeitet: Um die Schicht nach dem Auftrag zu vernetzen, wurden auf 1 000 Teile der Dispersion 35 Teile einer 41,6 %igen Lösung eines Isocyanatharzes aus 1 Mol Trimethylolpropan und 3 Molen Toluylendiisocyanat in 58,4 Teilen Tetrahydrofuran, 15 Minuten lang zugerührt. Nach Filtration durch ein Papierfilter wurde die Dispersion mittels einer Rasterwalze auf eine 15 µm Polyethylenterephthalatfolie aufgebracht und im Trockenkanal der Beschichtungsmaschine getrocknet. Die erzielte Rückschichtdicke betrug 0,5 µm.

Die Rückschicht war sehr gleichmäßig und ohne jegliche Streifenbildung aufgetragen. Der Pigmentvolumenanteil der Kieselsäure in der Schicht betrug 21,36 %. Zur weiteren Verarbeitung wurde anschließend die Magnetschicht mit CrO₂ als magnetischem Pigment in herkömmlicher Weise auf die der Rückschicht gegenüberliegenden Folienseite 2,5 µm dick aufgetragen. Nach Kalandrierung wurde die Folienbahn in 12,7 mm breite (1/2-Zoll) Bänder aufgeschnitten.

Von den Bändern wurden die Videowerte gemessen. Die Ergebnisse sind in der Tabelle 2 angegeben.

### Beispiel 2

Es wurde wie in Beispiel 1 beschrieben verfahren, jedoch wurde die 12,5 %ige Lösung des Polyurethans mit einem Molekulargewicht von 70 000 und einem Phosphatgehalt von 40 mÄquivalent/kg Produkt in den Dispergierstufen I und II im Verhältnis 30 : 70 zugegeben und nicht wie im Beispiel 1 50 : 50. Die Dispersion wurde gleichfalls wie in Beispiel 1 angegeben geprüft und weiterverarbeitet. Die Ergebnisse sind in den Tabellen aufgeführt.

### Beispiel 3

Es wurde wie in Beispiel 1 beschrieben verfahren, jedoch wurde die 12,5 %ige Lösung des Polyurethans mit einem Molekulargewicht von 70 000 und einem Phosphatgehalt von 40 mÄquivalent/kg auf die Dispergierstufen I und II im Verhältnis 60 : 40 aufgeteilt. Die Dispersion wurde wie in Beispiel 1 angegeben geprüft und verarbeitet. Die Ergebnisse sind in den Tabellen aufgeführt.

### Beispiel 4

Es wurde wie in Beispiel 1 beschrieben verfahren, jedoch wurde die 12,5 %ige Lösung des Polyurethans mit einem Molekulargewicht von 70 000 und einem Phosphatgehalt von 40 mÄquivalent/kg Produkt ausschließlich in der Dispergierstufe II zugesetzt. Die Dispersion wurde wie in Beispiel 1 angegeben geprüft und weiterverarbeitet. Die Ergebnisse sind in den Tabellen aufgeführt.

### Beispiel 5

Es wurde wie in Beispiel 1 verfahren, jedoch wurde das in Beispiel 1 angegebene Polyphenoxyharz, durch die gleiche Menge einer 14,78 %igen Lösung eines Vinylchloridcopolymeren mit einem mittleren Molekulargewicht von 35 000 und einem Hydroxylgehalt von 1,8 Gew.-% in einem Gemisch aus 45,74 Teilen Tetrahydrofuran und 39,51 Teilen Dioxan ersetzt. Die Dispersion wurde wie in Beispiel 1 angegeben geprüft und weiterverarbeitet. Die Ergebnisse sind in den Tabellen aufgeführt.

### Beispiel 6

Es wurde wie in Beispiel 1 verfahren, jedoch wurde das in Beispiel 1 angegebene Polyphenoxyharz durch die gleiche Menge einer 16,04 %igen Lösung eines Polyvinylformalharzes mit einem mittleren Molekulargewicht von 60 000 und einer Hydroxylzahl von 75 mg KOH/g Substanz in einem Gemisch aus 45,04 Teilen Tetrahydrofuran und 39,02 Teilen Dioxan ersetzt. Die Dispersion wurde wie in Beispiel 1 angegeben geprüft und weiterverarbeitet. Die Ergebnisse sind in den Tabellen aufgeführt.

### Beispiel 7

In diesem Beispiel wurde der Volumenanteil des Polyurethans von 6,18 % auf 22,84 % erhöht und im Verhältnis 40 : 60 auf die Dispergierstufen I und II aufgeteilt, mit dem im Beispiel 6 angegebenen Polyvinylformalharz abgemischt und zusätzlich zu den in Beispiel 1 aufgeführten Pigmenten noch Furnace-Ruß mit einer Oberfläche von 250 m²/g mitverwendet. Die Schicht bestand nach der Fertigstellung aus folgenden Pigmentvolumenteilen: 15,87 % Ruß, 3,55 % Fällungskieselsäure und 1,8 % Zinkferrit. Die Dispersion wurde wie in Beispiel 1 angegeben geprüft und weiterverarbeitet. Die Ergebnisse sind in den Tabellen aufgeführt.

### Beispiel 8

Es wurde wie in Beispiel 1 verfahren, jedoch wurde die 12,5 %ige Lösung des Polyurethans mit einem Molekulargewicht von 70 000 und einem Phosphatgehalt von 40 mÄquivalent/kg, sowie die 10,62 %ige Lösung des linearen Polyesterurethanharzes, hergestellt aus Adipinsäure, 1,4-Butandiol und 4,4'-Diisocyanatodiphenylmethan, durch gleiche Volumenteile eines Polyesterurethanharzes, hergestellt auf der Basis von 1,4-Cyclohexandimethanol, Adipinsäure, Azelainsäure und 4,4'-Diisocyanatodiphenylmethan, mit einem Phosphatgehalt von 78 mÄquivalent/kg, einem Molekulargewicht von 71 000 und einer Tg von 60°C, ersetzt. Die Volumenteile in der Schicht betrugen von diesem Harz 28,28 %, vom Polyphenoxyharz 29,81 % und vom Isocyanatharz, hergestellt aus 1 Mol Trimethylolpropan und 3 Molen Toluylendiisocyanat, 14,63 %, bezogen auf die prozentuale Zusammensetzung der organischen Matrix. Die Dispersion wurde wie in Beispiel 1 angegeben geprüft und weiterverarbeitet. Die Ergebnisse sind in den Tabellen aufgeführt.

### Vergleichsversuch 1

Für den Vergleichsversuch wurde ein herkömmliches Polyesterurethan eingesetzt, bei dem keine Adsorption auf der Oberfläche der Fällungskieselsäure erfolgte.

In eine diskontinuierliche Rührwerksmühle mit einem Volumen von 10 000 Teilen wurden 3 325 Teile Zirkondioxidkugeln mit einem Durchmesser von 1,0 - 1,25 mm, 71,5 Teile einer Fällungskieselsäure mit einer mittleren Agglomeratgröße von 3 µm, 6,8 Teile eines kubischen Zinkferrits mit einer mittleren Teilchengröße von 0,12 µm, 9,2 Teile eines Polyolefins mit einem mittleren Molekulargewicht von 3 000 und einem mittleren kugelförmigen Teilchendurchmesser von 500 µm, 103 Teile einer 14,75 %igen Lösung eines Vinylchloridcopolymeren mit einem mittleren Molekulargewicht von 35 000 und einem Hydroxylgehalt von 1,8 Gew.-% in einem Gemisch aus 45,74 Teilen Tetrahydrofuran und 39,51 Teilen Dioxan, 162 Teile einer 10,62 %igen Lösung eines linearen Polyesterurethanharzes, hergestellt aus Adipinsäure, 1,4-Butandiol und 4,4'-Diisocyanatodiphenylmethan in einem Gemisch aus 47,95 Teilen Tetrahydrofuran und 41,43 Teilen Dioxan, 2,8 Teile einer isomeren C₁₈-Carbonsäure, 848 Teile eines Gemisches aus 455 Teile Tetrahydrofuran und 393 Teile Dioxan, eingefüllt. Dann wurde die Rührwerksmühle verschlossen und der Inhalt 6 Stunden dispergiert. Danach wurde die Mühle wieder geöffnet und noch 14,52 Teile einer 9,26 %igen Lösung von Dibutylzinndilaurat in einem Gemisch aus 48,68 Teilen Tetrahydrofuran und 42,06 Teile Dioxan, 5,7 Teile einer 8,5 %igen Lösung eines Fluoradditives in einem Gemisch aus 49,10 Teilen Tetrahydrofuran und 42,4 Teilen Dioxan, 751 Teile einer 10,62 %igen Lösung des zuvor beschriebenen linearen Polyesterurethanharzes in einem Gemisch aus 47,95 Teilen Tetrahydrofuran und 41,43 Teilen Dioxan, 414,75 Teile einer 14,75 %igen Lösung des zuvor beschriebenen Vinylcopolymeren in einem Gemisch aus 45,74 Teilen Tetrahydrofuran und 39,51 Teilen Dioxan, 1807,5 Teile eines Gemisches aus 969,65 Teilen Tetrahydrofuran und 837,85 Teilen Dioxan, eingefüllt und weitere 3 Stunden gemahlen. Die Dispersion wurde wie in Beispiel 1 angegeben geprüft und weiterverarbeitet. Die Ergebnisse sind in den Tabellen aufgeführt.

### Vergleichsversuch 2

Es wurde wie in Vergleichsversuch 1 verfahren, jedoch wurde das im Vergleichsversuch angegebene Vinylcopolymere durch denselben Volumenanteil eines Polyphenoxyharzes ersetzt. Die Ergebnisse sind in den Tabellen aufgeführt.

### Vergleichsversuch 3

Es wurde wie in Beispiel 1 verfahren, jedoch wurde das Polyurethan ausschließlich in die Dispergierstufe I zugesetzt. Die Ergebnisse sind in den Tabellen aufgeführt.

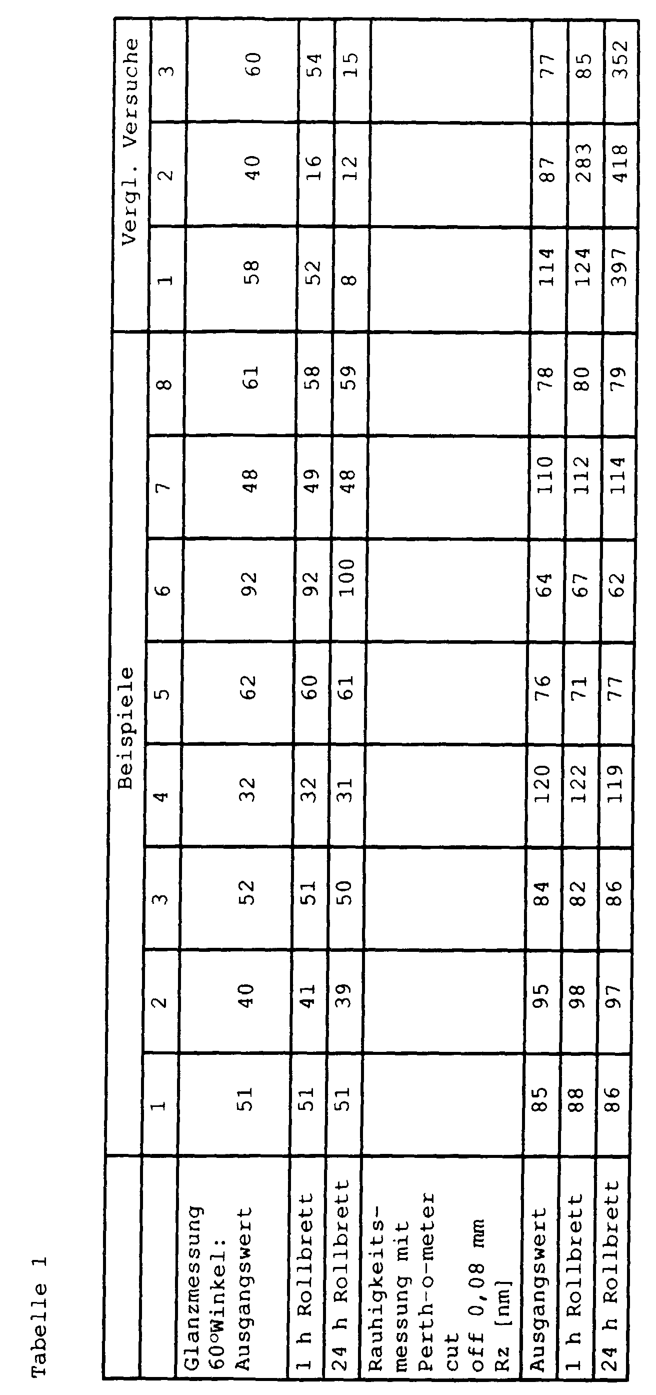

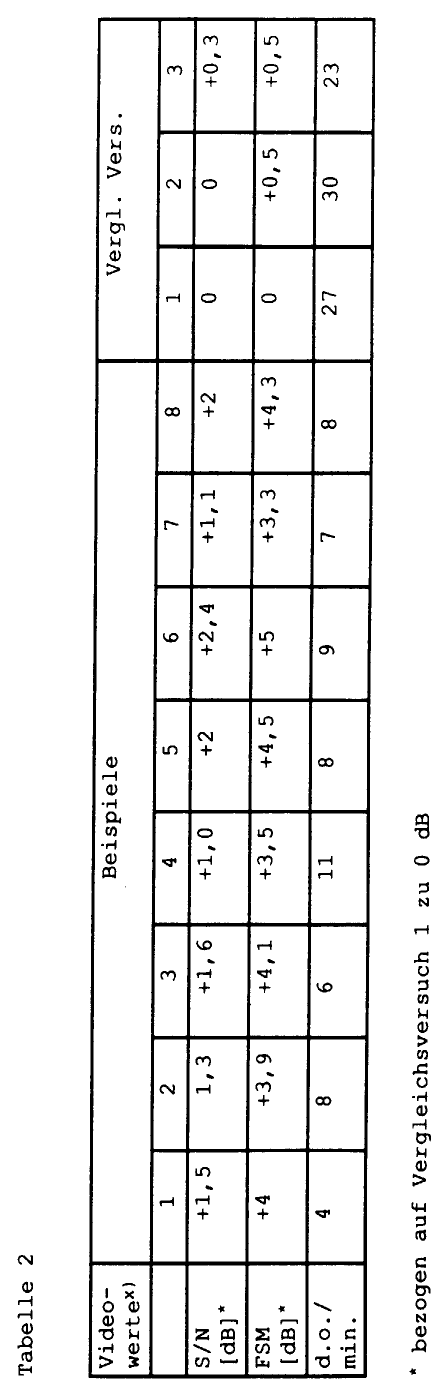

## Patentansprüche

1. Magnetische Aufzeichnungsträger, im wesentlichen bestehend aus einem bahnförmigen unmagnetischen Substrat, einer auf der einen Hauptseite des bahnförmigen Substrats aufgebrachten Magnetschicht und einer auf der gegenüberliegenden Hauptseite des Substrats aus einem polymeren Bindemittel und nichtmagnetischen Füllstoffen sowie Stützpigmenten gebildeten Rückschicht, dadurch gekennzeichnet, daß die Rückschicht 15 bis 40 Vol.-%, bezogen auf das Volumen der Rückschicht, einer Fällungskieselsäure mit einem SiO₂-Gehalt von 98 bis 99,5 %, einem pH-Wert von 5 bis 7 und einer spezifischen Oberfläche von 90 bis 650 m²/g enthält, deren Oberfläche mit einem Polyurethan mit einem mittleren Molekulargewicht M_{w} zwichen 40 000 und 120 000, das Phosphatgruppen in einer Menge von 10 bis 100 mÄquivalent Phosphat pro Kilogramm Polyurethan aufweist, in einer Menge von 0,05 bis 0,25 mg/m² belegt ist.

2. Magnetische Aufzeichnungsträger gemäß Anspruch 1, dadurch gekennzeichnet, daß das Polyurethan ein Produkt auf Polyester-Polyether-MDI-Basis ist.

## Claims

1. A magnetic recording medium, consisting essentially of a web-like nonmagnetic substrate, a magnetic layer applied to one main side of the web-like substrate and a backing coating formed on the opposite main side of the substrate from a polymeric binder and nonmagnetic fillers as well as supporting pigments, wherein the backing coating contains from 15 to 40% by volume, based on the volume of the backing coating, of a precipitated silica which has an SiO₂ content of from 98 to 99.5%, a pH of from 5 to 7 and a specific surface area of from 90 to 650 m²/g and whose surface has been treated with from 0.05 to 0.25 mg/m² of a polyurethane which has a mean molecular weight M_{w} of from 40,000 to 120,000 and contains phosphate groups in an amount of from 10 to 100 milliequivalents of phosphate per kilogram of polyurethane.

2. A magnetic recording medium as claimed in claim 1, wherein the polyurethane is a product based on polyester/polyether/MDI.

## Revendications

1. Supports magnétiques d'enregistrement constitués essentiellement d'un substrat non magnétique en forme de bande, d'une couche magnétique appliquée sur une face principale de ce substrat en forme de bande et d'une couche dorsale formée sur la face principale opposée du substrat et constituée d'un liant polymère, de matières de charge non magnétiques et de pigments supports, caractérisés par le fait que la couche dorsale contient de 15 à 40 % en volume, relativement à son volume, d'un acide silicique précipité ayant une teneur en SiO₂ de 98 à 99,5 %, un pH de 5 à 7 et une aire massique de 90 à 650 m²/g, dont la surface est garnie de 0,05 à 0,25 mg/m² d'un polyuréthane de masse moléculaire moyenne M_{w} comprise entre 40 000 et 120 000 qui présente de 10 à 100 milliéquivalents phosphate de groupes phosphate par kilogramme de polyuréthane.

2. Supports magnétiques d'enregistrement selon la revendication 1, caractérisés par le fait que le polyuréthane est un produit à base de polyester-polyéther MDI.
